# EUROPÄISCHE PATENTSCHRIFT

(11) **EP 1 165 988 B1**
(45) Veröffentlichungstag und Bekanntmachung des Hinweises auf die Patenterteilung: **14.01.2004**
(21) Anmeldenummer: 01913604.3
(22) Anmeldetag: 08.02.2001
(51) Int. Cl.: F16H 61/22, F16H 59/10, F16H 61/16

(54) **SCHALTVORRICHTUNG FÜR EIN AUTOMATIKGETRIEBE**
GEAR SHIFT DEVICE FOR AN AUTOMATIC TRANSMISSION
DISPOSITIF DE CHANGEMENT DE VITESSES POUR UNE BOITE DE VITESSES AUTOMATIQUE

(30) Priorität: 08.02.2000 DE 10005328
(43) Veröffentlichungstag der Anmeldung: 02.01.2002
(73) Patentinhaber: ZF Lemförder Metallwaren AG, 49441 Lemförde (DE)
(72) Erfinder: GIEFER, Andreas, 49448 Lemförde (DE); MEYER, Jörg, 49419 Wagenfeld (DE)
(86) Internationale Anmeldenummer: PCT/DE2001/000491
(87) Internationale Veröffentlichungsnummer: WO 2001/059333

(56) Entgegenhaltungen:
- EP-A- 0 943 843
- DE-A- 4 118 519
- DE-A- 4 406 598
- DE-A- 19 628 099
- US-A- 5 695 029

## Beschreibung

Die Erfindung betrifft eine Schaltvorrichtung für ein Automatikgetriebe nach dem Oberbegriff des Patentanspruches 1.

Derartige Schaltvorrichtungen zur kraftlosen Übertragung von Schaltbefehlen an ein Automatikgetriebe eines Kraftfahrzeuges, weisen einen in mindestens einer Schaltgasse, um wenigstens eine Achse schwenkbar in einem Gehäuse gelagerten Schalthebel auf. Der Schalthebel erfaßt die Schaltsignale elektrisch, elektromagnetisch oder optisch und gibt sie entsprechend weiter. Eine Rastiereinrichtung, die mit dem Schalthebel entlang einer den Schaltstellungen (P, R, N, D, ...) zugeordneten Kontur einer Kulisse geführt ist, ermöglicht die Simulation der einzelnen Schaltstellungen für den Fahrzeugführer, um ihm ein "Schaltgefühl" zu vermitteln. Eine derartige Schaltvorrichtung ist beispielsweise aus der Patentanmeldung DE 197 56 034 A1 bekannt.
Diese bekannten, sogenannten "Shift by Wire"-Schaltvorrichtungen übertragen die Schaltbefehle zumeist an ein elektronisches Steuergerät, welches in Abhängigkeit von gegebenenfalls vorgewählten Parametern den entsprechenden Schaltbefehl an das Automatikgetriebe weitergibt, wenn der Fahrzustand des Fahrzeuges dies erlaubt. Somit findet ein permanenter Soll- Ist-Wertvergleich statt. Der Fahrzeugführer kann am Schalthebel theoretisch während der Fahrt eine andere, eigentlich nicht zulässige Schaltstellung anwählen, ohne dass dies unmittelbar an das Getriebe weitergegeben wird, weil die zulässigen Parameter, wie beispielsweise die Fahrzeuggeschwindigkeit nicht mit der gewählten Fahrstufe übereinstimmen.

So wäre es auch denkbar, dass der Rückwärtsgang angewählt wird, obwohl sich das Fahrzeug in der Vorwärtsbewegung befindet. Das Automatikgetriebe würde allerdings nicht umschalten. Werden jedoch die voreingestellten Parameter während der Fahrt erreicht, unterschreitet also beispielsweise die Geschwindigkeit einen bestimmten Grenzwert, so gibt das Steuergerät das Signal für den zuvor versehentlich angewählten Rückwärtsgang an das Automatikgetriebe weiter und die entsprechende Fahrstufe wird eingelegt. Dies kann beispielsweise an Kreuzungen zu Unfällen führen.

Aus der DE 41 18 519 A1 ist eine Schaltvorrichtung für ein Automatikgetriebe mit einem Schalthebel bekannt, der innerhalb wenigstens einer Schaltgasse und um mindestens eine Achse schwenkbar in einem Gehäuse gelagert ist. Die Schaltsignale werden elektrisch, elektromagnetisch oder optisch erfaßt und weitergegeben. Eine Rastiereinrichtung am Schalthebel ist mit diesem entlang einer den Schaltstellungen (P, R, N, D, ...) zugeordneten Kontur einer Kulisse geführt, wobei ein zwischen mindestens zwei Positionen (aktiv / inaktiv) um eine Achse verschwenkbares, geschwindigkeitsabhängig gesteuertes Mittel in wenigstens einer Schaltstellung gegen die Rastiervorrichtung verschwenkbar ist, sodass der Schalthebel nicht aus einer vorgewählten Schaltstellung heraus bewegt werden kann. Somit sind Fehlschaltungen vermeidbar.
Die US 5,695,029 offenbart darüber hinaus eine Schaltvorrichtung für ein Automatikgetriebe mit einem Schalthebel, der innerhalb wenigstens einer Schaltgasse und um mindestens eine Achse schwenkbar in einem Gehäuse gelagert ist, wobei die Schaltsignale elektrisch, elektromagnetisch oder optisch erfaßt und weitergegeben werden. Der Schalthebel ist entlang einer den Schaltstellungen (P, R, N, D, ...) zugeordneten Kulisse geführt. Die in der Druckschrift beschriebene Lösung weist ein zwischen mindestens zwei Positionen (aktiv / inaktiv) um eine Achse verschwenkbares, geschwindigkeitsabhängig gesteuertes Mittel auf, das in wenigstens einer Schaltstellung gegen den Schalthebel verschwenkbar ist, sodass dieser in der vorgewählten Schaltstellung verbleibt.

Der Erfindung liegt die technische Problemstellung zugrunde, eine Schaltvorrichtung zu schaffen, die Fehlschaltungen wirksam vermeidet.

Die Erfindung löst diese technische Problemstellung mit den kennzeichnenden Merkmalen des Schutzanspruches 1. Weitere Ausgestaltungen der Erfindung sind Gegenstand der Unteransprüche.

Eine erfindungsgemäße Schaltvorrichtung weist dementsprechend ein zwischen mindestens zwei Positionen (aktiv / inaktiv) um eine Achse verschwenkbares, geschwindigkeitsabhängig gesteuertes Mittel auf, das in wenigstens einer Schaltstellung gegen die Rastiervorrichtung verschwenkbar ist, sodass der Schalthebel in der vorgewählten Schaltstellung verbleibt oder selbsttätig in diese zurückgeführt wird.
Der Schalthebel ist erfindungsgemäß bei aktiviertem Rampenhebel nur zwischen den Schaltstellungen "N" und "D" verschwenkbar und bei einer Bewegung in Richtung einer Fehlschaltung also beispielsweise aus einer Vorwärtsfahrstufe heraus in die Schaltstellung "R", wird die Rastiereinrichtung an der ansteigend ausgeführten Kontaktfläche des Rampenhebels mit ansteigendem Kraftaufwand entlanggeführt, sodass der Schalthebel nach dem Loslassen desselben durch den Fahrzeugführer selbsttätig wieder die Neutralposition "N" bzw. die zuvor gewählte Fahrstufe "D" einnimmt.
Mit einer derartigen Schaltvorrichtung können versehentliche Fehlschaltungen wirksam verhindert werden. Die Schaltvorrichtung ist dabei sehr einfach aufgebaut und die Mittel sind ebenfalls über das zentrale Steuergerät schalt- bzw. steuerbar.

Gemäß einer weiteren Ausgestaltung der Erfindung wird als zwischen mindestens zwei Positionen (aktiv / inaktiv) verschwenkbares Mittel ein um eine Achse verschwenkbarer Rampenhebel eingesetzt, der in wenigstens einer Vorwärtsfahrstufe des Schalthebels eine Position einnimmt, die die unbeabsichtigte Anwahl der Rückwärtsfahrstufe während der Fahrt verhindert.
Dieser Rampenhebel kann auf seiner der Rastiereinrichtung zugewandten Seite eine rampenartig ansteigende Kontaktfläche aufweisen.
Vorzugsweise ist er mit einem Stellglied gekoppelt, das ein Bowdenzug, ein Gestänge ein Elektromagnet oder eine hydraulisch oder pneumatisch wirkende Stelleinrichtung sein kann.
Das Stellglied weist dabei ein um eine Lagerstelle schwenkbares, längenveränderliches Stellelement auf, das mit dem Rampenhebel beabstandet zu seiner Achse gekoppelt ist, sodass eine Längenveränderung des Stellelementes eine auf den Rampenhebel wirkende Hebelkraft ausübt, sodass dieser zwischen einer aktivierten und inaktivierten Position verschwenkt werden kann.
Der Rampenhebel nimmt entsprechend einer Weiterbildung der Erfindung seine aktivierte, eine Fehlschaltung verhindernde Position ein, wenn die Geschwindigkeit des Fahrzeuges größer einem vorgegebenen Grenzwert von beispielsweise 5 km/h beträgt und die Vorwärtsfahrstufe (D) angewählt ist.

Der Rampenhebel kann auf der der Rastiervorrichtung zugewandten Seite zumindest abschnittsweise eine der Kulisse entsprechende Kontur aufweisen. Dies hat den Vorteil, dass bei aktiviertem Rampenhebel ein Wechsel zwischen den Schaltstellungen "D" und "N" möglich ist und nur die Anwahl der Rückwärtsfahrstufe verhindert wird.

Die Rastiervorrichtung kann entsprechend einer weiteren erfindungsgemäßen Ausgestaltung aus einer am Schalthebel befestigten Blattfeder bestehen, an deren freien Ende eine Aufnahme mit einer darin drehbar gelagerten Konturrolle vorhanden ist, die auf der Kontur der Kulisse abrollt. Die Kontur der Kulisse kann dabei in an sich bekannter Weise wellenförmig ausgebildet sein, wobei jedes Wellental einer Schaltstellung (P, R, N, D, ...) entspricht.

Selbstverständlich können die vorstehend genannten und die nachfolgend noch zu erläuternden Merkmale der Erfindung nicht nur in der jeweils angegebenen Kombination, sondern auch in anderen Kombinationen, zusätzlich oder in Alleinstellung verwendet werden, ohne dabei den Rahmen der Erfindung zu verlassen.

Eine erfindungsgemäße, bevorzugte Ausführungsform einer Schaltvorrichtung für ein Automatikgetriebe wird nachfolgend in stark vereinfachter Darstellung anhand der Zeichnungen näher beschrieben.
Es zeigen:
- **Figur 1:**: eine Ansicht des Innenlebens einer erfindungsgemäßen Schaltvorrichtung in Seitenansicht in der Schaltstellung "N",
- **Figur 2:**: eine Ansicht des Innenlebens einer erfindungsgemäßen Schaltvorrichtung in Seitenansicht in der Schaltstellung "R",
- **Figur 3:**: eine Ansicht des Innenlebens einer erfindungsgemäßen Schaltvorrichtung in Seitenansicht in der Schaltstellung "D"
und
- **Figur 4:**: eine räumliche Ansicht des Innenlebens einer erfindungsgemäßen Schaltvorrichtung in der Schaltstellung "R".

In den Figuren ist an einem innerhalb einer Schaltgasse um eine Achse 2 schwenkbaren Schalthebel 1 eine insgesamt mit 4 bezeichnete Rastiereinrichtung angebracht. Diese besteht aus einer Blattfeder 12, deren Ende eine Aufnahme 13 mit einer darin gehaltenen Konturrolle 14 bildet. Die Konturrolle 14 rollt auf einer kulissenförmigen Kontur 5 der Schaltvorrichtung ab, die vorliegend ein Bestandteil des Gehäuses 3 ist. Die Kulisse 5 ist in an sich bekannter Weise wellenförmig gestaltet, wobei jedem Wellental eine Schaltstellung (P, R, N, D,....) der Schaltvorrichtung entspricht. Da es sich bei der gezeigten Schaltvorrichtung um eine sogenannte "Shift by wire"-Schaltung handelt, werden die vom Fahrzeugführer angewählten Schaltstellungen (P, R, N, D,...,) als der Position des Schalthebels 1 entsprechende Signale erfaßt und an ein Steuergerät des Getriebes weitergeleitet, welches permanent Soll-Ist-Wertvergleiche durchführt und die Umschaltung des Automatikgetriebes nur in Abhängigkeit vordefinierter Schaltparameter ansteuert. Durch diese Art der Erfassung und Weiterleitung der Schaltsignale besteht keine mechanische Verbindung zum Automatikgetriebe, sodaß dem Fahrzeugführer das "Schaltgefühl" fehlt. Dieses kann durch die Kulisse 5 gewissermaßen simuliert werden.

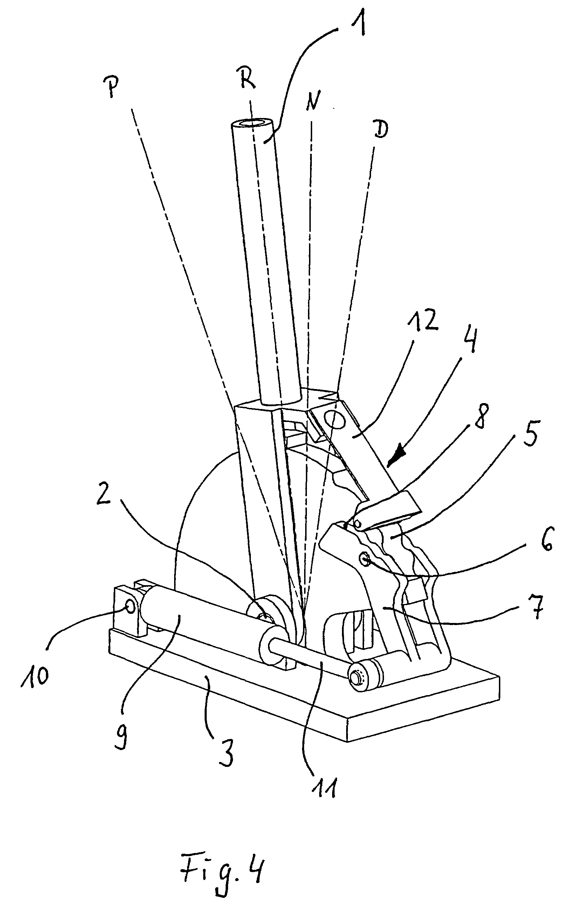

Während der Vorwärtsfahrt ist die Schaltstellung "D" eingelegt, während bei der Annäherung an eine Kreuzung auch in die Schaltstellung "N" gewechselt werden kann. Solange die Vorwärtsfahrtstufe "D" angewählt ist, besteht theoretisch die Möglichkeit, daß der Fahrzeugführer durch Betätigung des Schalthebels 1 diesen versehentlich in eine nicht zulässige Schaltstellung (beispielsweise "R") überführt. Da das Getriebe durch die Steuerung über ein zwischengeschaltetes Steuergerät nicht unmittelbar den entsprechenden Schaltbefehl erhält, geschieht solange nichts, bis die vordefinierten Parameter erfüllt und vom Steuergerät erkannt werden. So ist beispielsweise das Einlegen des Rückwärtsganges erst unterhalb einer Geschwindigkeit von 5 km/h möglich. Das birgt besonders bei verlangsamter Fahrt oder an Kreuzungen unnötige Unfallgefahren in sich, sodaß eine erfindungsgemäße Schaltvorrichtung ein Mittel 7 aufweist, das in wenigstens einer Schaltstellung (beispielsweise in "D") gegen die Rastiervorrichtung 4 verschwenkt ist, sodaß der Schalthebel 1 in der vorgewählten Schaltstellung verbleibt oder selbsttätig in diese zurückgeführt wird. Hierzu wird bei der in den Figuren gezeigten Ausführung ein Rampenhebel 7 eingesetzt, der auf seiner der Rastiervorrichtung 4 zugewandten Seite eine Kontaktfläche 8 aufweist, an der die seitlich über die Kulisse 5 hinausragende Konturrolle 14 entlangrollt, was aus der Figur 4 ersichtlich wird. Der Anstieg dieser Kontaktfläche bewirkt bei aktiviertem Rampenhebel 7, daß die weitere Bewegung des Schalthebels 1 in Richtung der unzulässigen Schaltstellung (hier: "R" oder "P") einen ansteigenden Kraftaufwand erfordert und letztlich die Anwahl dieser Fahrstufe gänzlich verhindert, weil der Schalthebel 1, nachdem der Fahrzeugführer ihn losgelassen hat, selbsttätig in seine Ursprungslage zurückgeführt wird.

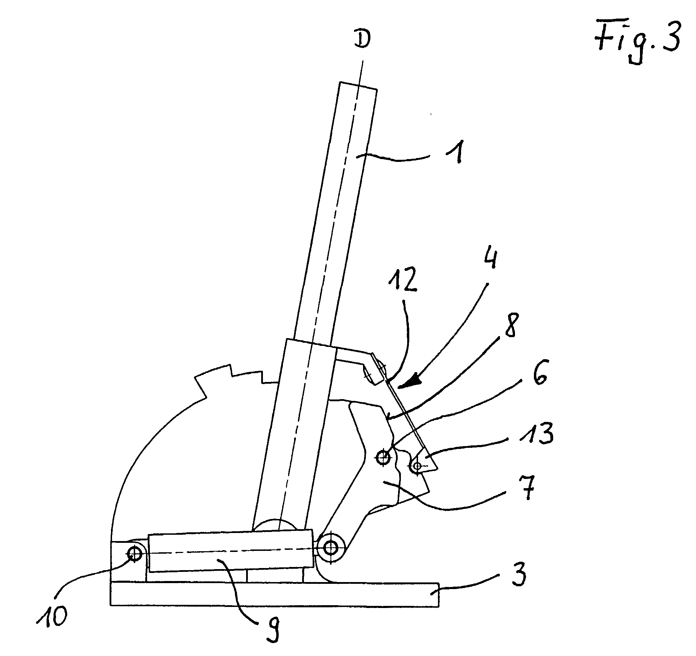

Der Rampenhebel 7 ist um eine Achse 6 schwenkbar in dem Gehäuse 3 gelagert. An seinem unterhalb der Achse 6 vorhandenen, verlängerten Abschnitt ist er mit einem Stellglied 9 verbunden, das ein Elektromagnet ist, dessen längenveränderliches Stellelement (Anker) 11 unmittelbar an dem Rampenhebel 7 ansetzt. Das Stellglied 9 ist seinerseits in einer Lagerstelle 10 aufgenommen und geringfügig um diese verschwenkbar.
Die Figuren unterscheiden sich insofern, als in der Figur 3 ein aktivierter Rampenhebel 7 dargestellt ist, das heißt, das Stellelement 11 des Stellgliedes 9 ist vollständig eingezogen und der Rampenhebel 7 um die Achse 6 in Richtung der Rastiervorrichtung 4 verschwenkt, sodaß die ansteigende Kontaktfläche 8 des Rampenhebels 7 die Anwahl der bei Vorwärtsfahrt unerlaubten Rückwärtsfahrstufe "R" verhindert.

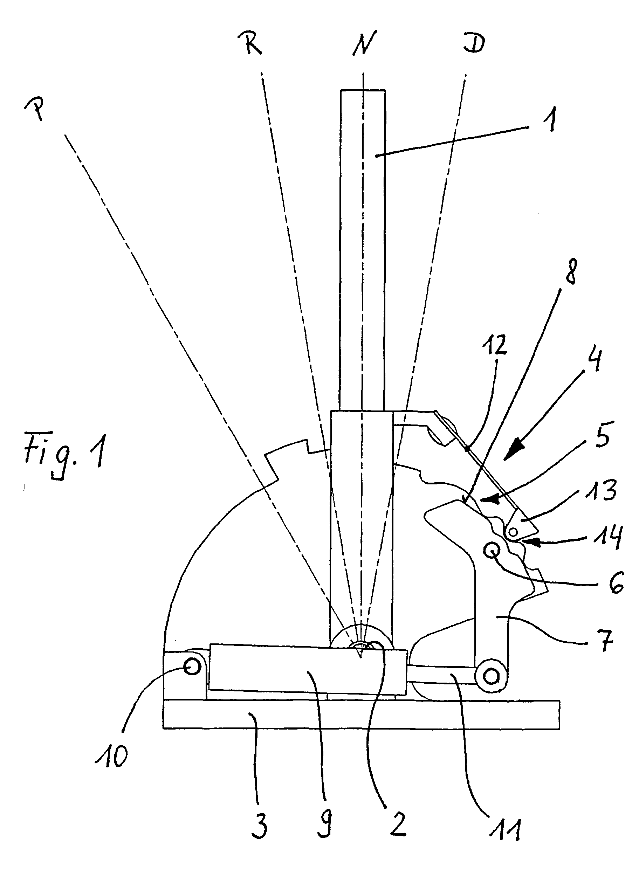

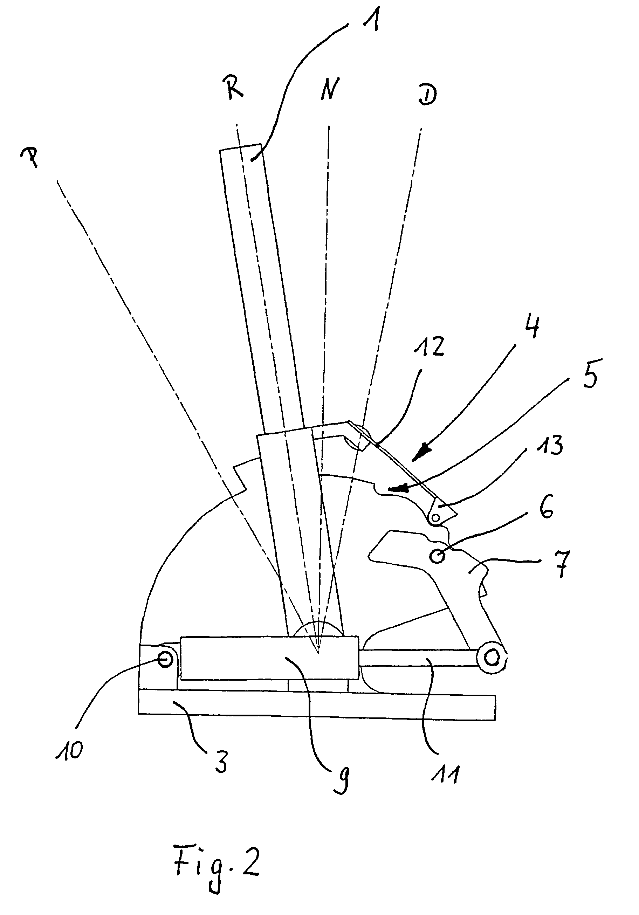

Die Figuren 1, 2 und 4 zeigen hingegen einen inaktivierten Rampenhebel 7, das heißt, hier sind sämtliche Fahrstufen frei wählbar, was beispielsweise bei einer Geschwindigkeit unterhalb 5 km/h möglich sein soll.

### Bezugszeichenliste:

- 1: Schalthebel
- 2: Achse
- 3: Gehäuse
- 4: Rastiereinrichtung
- 5: Kulisse
- 6: Achse
- 7: Rampenhebel
- 8: Kontaktfläche
- 9: Stellglied
- 10: Lagerstelle
- 11: Stellelement
- 12: Blattfeder
- 13: Aufnahme
- 14: Konturrolle

## Patentansprüche

1. Schaltvorrichtung für ein Automatikgetriebe mit einem Schalthebel (1), der innerhalb wenigstens einer Schaltgasse und um mindestens eine Achse (2) schwenkbar in einem Gehäuse (3) gelagert ist, der die Schaltsignale elektrisch, elektromagnetisch oder optisch erfaßt und weitergibt, der eine Rastiereinrichtung (4) aufweist, die mit dem Schalthebel entlang einer den Schaltstellungen (P, R, N, D, ...) zugeordneten Kontur einer Kulisse (5) geführt ist, wobei ein zwischen mindestens einer aktiven und einer inaktiven Position um eine Achse (6) verschwenkbares, geschwindigkeitsabhängig gesteuertes Mittel (7) in wenigstens einer Schaltstellung gegen die Rastiervorrichtung (4) verschwenkbar ist, sodass der Schalthebel (1) in der vorgewählten Schaltstellung verbleibt oder selbsttätig in diese zurückgeführt wird,
**dadurch gekennzeichnet, dass**
das zwischen mindestens der aktiven und der inaktiven Position verschwenkbare Mittel ein um eine Achse (6) verschwenkbarer Rampenhebel (7) ist und der Schalthebel (1) bei aktiviertem Rampenhebel (7) nur zwischen den Schaltstellungen "N" und "D" verschwenkbar ist und bei einer Bewegung in Richtung einer Fehlschaltung "R" die Rastiereinrichtung (4) an der ansteigend ausgeführten Kontaktfläche (8) des Rampenhebels (7) mit ansteigendem Kraftaufwand entlanggeführt wird, sodass der Schalthebel (1) selbsttätig wieder die Neutralposition "N" bzw. die zuvor gewählte Fahrstufe "D" einnimmt.

2. Schaltvorrichtung für ein Automatikgetriebe nach Anspruch 1,
**dadurch gekennzeichnet, dass**
der Rampenhebel (7) in wenigstens einer Vorwärtsfahrstufe des Schalthebels (1) eine Position einnimmt, die die unbeabsichtigte Anwahl der Rückwärtsfahrstufe während der Fahrt verhindert.

3. Schaltvorrichtung für ein Automatikgetriebe nach Anspruch 1 oder 2,
**dadurch gekennzeichnet, dass**
der Rampenhebel (7) auf seiner der Rastiereinrichtung (4) zugewandten Seite eine rampenartig ansteigende Kontaktfläche (8) aufweist.

4. Schaltvorrichtung für ein Automatikgetriebe nach Anspruch 3,
**dadurch gekennzeichnet, dass**
der Rampenhebel (7) eine Kopplung mit einem Stellglied (9) aufweist.

5. Schaltvorrichtung für ein Automatikgetriebe nach Anspruch 4,
**dadurch gekennzeichnet, dass**
das Stellglied (9) ein Bowdenzug, ein Gestänge ein Elektromagnet oder eine hydraulisch oder pneumatisch wirkende Stelleinrichtung ist.

6. Schaltvorrichtung für ein Automatikgetriebe nach Anspruch 5,
**dadurch gekennzeichnet, dass**
das um eine Lagerstelle (10) schwenkbare Stellglied (9) ein längenveränderliches Stellelement (11) aufweist, das mit dem Rampenhebel (7) beabstandet zu seiner Achse (6) gekoppelt ist, sodass eine Längenveränderung des Stellelementes (11) eine auf den Rampenhebel wirkende Hebelkraft ausübt.

7. Schaltvorrichtung für ein Automatikgetriebe nach einem der vorstehend genannten Ansprüche,
**dadurch gekennzeichnet, dass**
der Rampenhebel (7) seine aktivierte, eine Fehlschaltung verhindernde Position einnimmt, wenn die Geschwindigkeit des Fahrzeuges größer einem vorgegebenen Grenzwert von beispielsweise 5 km/h beträgt und die Vorwärtsfahrstufe (D) angewählt ist.

8. Schaltvorrichtung für ein Automatikgetriebe nach einem der vorstehend genannten Ansprüche,
**dadurch gekennzeichnet, dass**
der Rampenhebel (7) auf der der Rastiervorrichtung zugewandten Seite zumindest abschnittsweise eine der Kulisse (5) entsprechende Kontur aufweist.

9. Schaltvorrichtung für ein Automatikgetriebe nach einem der vorstehend genannten Ansprüche,
**dadurch gekennzeichnet, dass**
die Rastiervorrichtung (4) aus einer am Schalthebel (1) befestigten Blattfeder (12) besteht, deren freies Ende eine Aufnahme (13) mit einer darin drehbar gelagerten Konturrolle (14) bildet, die auf der Kontur der Kulisse (5) abrollt.

10. Schaltvorrichtung für ein Automatikgetriebe nach einem der vorstehend genannten Ansprüche,
**dadurch gekennzeichnet, dass**
die Kontur der Kulisse (5) wellenförmig ausgebildet ist, wobei jedes Wellental einer Schaltstellung (P, R, N, D, ...) entspricht.

11. Schaltvorrichtung für ein Automatikgetriebe nach einem der vorstehend genannten Ansprüche,
**dadurch gekennzeichnet, dass**
der inaktivierte Rastierhebel (7) um die Achse (6) aus dem Eingriffsbereich der Rastiervorrichtung (4) heraus verschwenkt ist.

## Claims

1. Gear shift device for an automatic transmission having a shift lever (1), which is mounted in a housing (3) so as to be pivotable within at least one shift track and about at least one axis (2) and which detects and transmits the shift signals electrically, electromagnetically or optically and which comprises a detent device (4), which is guided with the shift lever along a contour of a gate (5) that is associated with the shift positions (P, R, N, D, ...), wherein a speed-dependently controlled means (7), which is pivotable about an axis (6) between at least one active and one inactive position, in at least one shift position is pivotable against the detent device (4) so that the shift lever (1) remains in the previously selected shift position or is automatically. returned to the previously selected shift position,
**characterized in that**
the means pivotable between at least the active and the inactive position is a ramp lever (7), which is pivotable about an axis (6), and in the activated state of the ramp lever (7) the shift lever (1) is pivotable only between the shift positions "N" and "D" and in the event of a movement in the direction of an incorrect gear shift "R" the detent device (4) is guided along the ascending contact surface (8) of the ramp lever (7) with increasing expenditure of force, so that the shift lever (1) automatically readopts the neutral position "N" and/or the previously selected driving step "D".

2. Gear shift device for an automatic transmission according to claim 1,
**characterized in that**
the ramp lever (7) in at least one forward driving step of the shift lever (1) occupies a position that prevents unintentional selection of the reverse driving step during travel.

3. Gear shift device for an automatic transmission according to claim 1 or 2,
**characterized in that**
the ramp lever (7) at its side facing the detent device (4) has a contact surface (8) ascending in a ramp-like manner.

4. Gear shift device for an automatic transmission according to claim 3,
**characterized in that**
the ramp lever (7) has a coupling to an actuator (9).

5. Gear shift device for an automatic transmission according to claim 4,
**characterized in that**
the actuator (9) is a Bowden cable, a linkage, an electromagnet or a hydraulically or pneumatically acting actuating device.

6. Gear shift device for an automatic transmission according to claim 5,
**characterized in that**
the actuator (9), which is pivotable about a bearing point (10), comprises an actuating element (11), which is variable in length and is coupled to the ramp lever (7) at a distance from the latter's axis (6), so that a variation of the length of the actuating element (11) exerts a leverage acting upon the ramp lever.

7. Gear shift device for an automatic transmission according to one of the preceding claims,
**characterized in that**
the ramp lever (7) occupies its activated position, which prevents an incorrect gear shift, when the speed of the vehicle is greater than a preset limit value of e.g. 5 kph and the forward driving step (D) is selected.

8. Gear shift device for an automatic transmission according to one of the preceding claims,
**characterized in that**
the ramp lever (7) at the side facing the detent device has at least in sections a contour corresponding to the gate (5).

9. Gear shift device for an automatic transmission according to one of the preceding claims,
**characterized in that**
the detent device (4) comprises a leaf spring (12), which is fastened to the shift lever (1) and the free end of which forms a receiver (13) with a contour roller (14) mounted rotatably therein, which rolls along the contour of the gate (5).

10. Gear shift device for an automatic transmission according to one of the preceding claims,
**characterized in that**
the contour of the gate (5) is of a wavy design, wherein each wave trough corresponds to one shift position (P, R, N, D, ...).

11. Gear shift device for an automatic transmission according to one of the preceding claims,
**characterized in that**
the inactivated ramp lever (7) is pivoted about the axis (6) out of the range of action of the detent device (4) .

## Revendications

1. Dispositif de changement de vitesse pour une transmission automatique, comportant un levier de changement de vitesse (1) qui est monté dans un boîtier (3), à l'intérieur d'au moins une voie de commutation et peut pivoter autour d'au moins un axe (2), qui détecte et transmet les signaux de commutation de manière électrique, électromagnétique ou optique, qui comporte un dispositif d'arrêt (4) guidé avec le levier de changement de vitesse le long d'un contour, associé aux positions de commutation (P,R,N,D, ...) d'une coulisse (5), un moyen (7) pouvant pivoter entre au moins une position active et une position inactive autour d'un axe (6) et commandé en fonction de la vitesse, pouvant pivoter au moins dans une position de commutation par rapport au dispositif d'arrêt (4), de sorte que le levier de changement de vitesse (1) reste dans la position de commutation pré-sélectionnée ou se replace automatiquement dans celle-ci,
**caractérisé en ce que**
le moyen pouvant pivoter entre au moins la position active et la position inactive est un levier à rampe (7) pouvant pivoter autour d'un axe (6) et, lorsque le levier à rampe (7) est activé, le levier de changement de vitesse (1) ne peut pivoter qu'entre les positions de commutation "N" et "D", et en cas de mouvement dans le sens d'une position erronée "R", le dispositif d'arrêt (4) est guidé, avec l'application d'une force croissante, le long de la surface de contact (8) réalisée montante du levier à rampe (7), de sorte que le levier de changement de vitesse (1) prend automatiquement à nouveau la position neutre "N" ou le rapport "D" sélectionné précédemment.

2. Dispositif de changement de vitesse pour une transmission automatique selon la revendication 1,
**caractérisé en ce que**
dans au moins un cran de marche avant du levier de changement de vitesse (1), le levier à rampe (7) prend une position qui empêche la sélection involontaire du cran de marche arrière pendant la marche.

3. Dispositif de changement de vitesse pour une transmission automatique selon la revendication 1 ou 2,
**caractérisé en ce que**
le levier à rampe (7) présente, sur son côté tourné vers le dispositif d'arrêt (4), une surface de contact (8) montant à la manière d'une rampe.

4. Dispositif de changement de vitesse pour une transmission automatique selon la revendication 3,
**caractérisé en ce que**
le levier à rampe (7) comporte un couplage avec un organe de positionnement (9).

5. Dispositif de changement de vitesse pour une transmission automatique selon la revendication 4,
**caractérisé en ce que**
l'organe de positionnement (9) est un câble Bowden, une tringlerie, un électroaimant ou un dispositif de positionnement agissant de manière hydraulique ou pneumatique.

6. Dispositif de changement de vitesse pour une transmission automatique selon la revendication 5,
**caractérisé en ce que**
l'organe de positionnement (9) pouvant pivoter autour d'un point d'appui (10) comporte un élément de positionnement (11) de longueur variable qui est couplé avec le levier à rampe (7), à distance de son axe (6), de sorte qu'une variation de la longueur de l'élément de positionnement (11) exerce une force de levier agissant sur le levier à rampe.

7. Dispositif de changement de vitesse pour une transmission automatique selon l'une des revendications précédentes,
**caractérisé en ce que**
le levier à rampe (7) prend sa position activée, empêchant une commutation erronée, lorsque la vitesse du véhicule est supérieure à une valeur limite prédéfinie de 5 km/h par exemple et le cran de marche avant (D) est sélectionné.

8. Dispositif de changement de vitesse pour une transmission automatique selon l'une des revendications précédentes,
**caractérisé en ce que**
le levier à rampe (7) présente, sur le côté tourné vers le dispositif d'arrêt, au moins par endroits un contour correspondant à la coulisse (5).

9. Dispositif de changement de vitesse pour une transmission automatique selon l'une des revendications précédentes,
**caractérisé en ce que**
le dispositif d'arrêt (4) est constitué d'un ressort à lame (12) fixé sur le levier de changement de vitesse (1), dont l'extrémité libre forme un logement (13) avec un galet de contour (14) monté tournant à l'intérieur, lequel roule sur le contour de la coulisse (5).

10. Dispositif de changement de vitesse pour une transmission automatique selon l'une des revendications précédentes,
**caractérisé en ce que**
le contour de la coulisse (5) est réalisé ondulé, chaque creux d'onde correspondant à une position de commutation (P,R,N,D, ...).

11. Dispositif de changement de vitesse pour une transmission automatique selon l'une des revendications précédentes,
**caractérisé en ce que**
le levier d'arrêt (7) désactivé est pivoté autour de l'axe (6) hors de la zone d'engagement du dispositif d'arrêt (4).
